# EUROPEAN PATENT APPLICATION

(11) **EP 3 407 538 A1**
(43) Date of publication of application: **28.11.2018**
(21) Application number: 16892384.5
(22) Date of filing: 22.12.2016
(51) Int. Cl.: H04L 12/14

(54) **CHARGING METHOD AND DEVICE**

(30) Priority: 29.02.2016 CN 201610113042
(71) Applicant: Huawei Technologies Co., Ltd., Longgang District Shenzhen, Guangdong 518129 (CN)
(72) Inventor: CHEN, Shan, Shenzhen Guangdong 518129 (CN); CHAI, Xiaoqian, Shenzhen Guangdong 518129 (CN)
(74) Representative: Gill Jennings & Every LLP
(86) International application number: PCT/CN2016/111531
(87) International publication number: WO 2017/148206

(57) **Abstract**

The present invention discloses a charging method and apparatus, so as to resolve a prior-art problem that there is no solution at present to charging based on a traffic steering policy. The method includes: after receiving a data packet, determining, by a charging trigger entity according to identification information carried in the data packet, a traffic steering policy used by the data packet, where the traffic steering policy indicates a service enabler that processes the data packet; and sending, by the charging trigger entity, usage information of the traffic steering policy to a charging system, where the usage information of the traffic steering policy is used for charging.

## Description

This application claims priority to Chinese Patent Application No. 201610113042.5, filed with the Chinese Patent Office on February 29, 2016 and entitled "CHARGING METHOD AND APPARATUS", which is incorporated herein by reference in its entirety.

### TECHNICAL FIELD

The present invention relates to the field of communications technologies, and in particular, to a charging method and apparatus.

### BACKGROUND

To resolve a problem such as quality of service (Quality of Service, QoS for short) gating control and flow-based charging, so as to provide better flow-based charging and policy control, a Policy and Charging Control (Policy and Charging Control, PCC) mechanism is put forward in the 3^{rd} Generation Partnership Project (The 3^{rd} Generation Partnership, 3GPP) release 7 (R7). By using the mechanism, a network can detect different service flows, and implement requirements such as QoS control and charging statistics collecting for a service flow. Application-based charging and policy control of a PCC architecture is enhanced in the 3GPP release 12.

Traffic service steering (Service Chain or Traffic Service Steering) is as follows: During transmission in a network, a data flow successively passes through various service enablers (Service Enabler, SE) in SGi/Gi-LAN according to a given sequence required by service logic. An SE may be a value-added service deployed by an operator, or may be a service provided by a third-party service provider, such as firewall, load balance (Load Balance, LB), video acceleration, advertisement, compression decoding, and antivirus processing. To meet rapid development of mobile Internet services and user's flexible service requirements in a Long Term Evolution (Long Term Evolution, LTE for short) generation, operators expect that a policy can be provided to implement traffic steering control of a Gi-LAN side according to different service features, user subscription information, a network status of a radio access network (Radio Access Network, RAN for short), network congestion information, and the like, so as to optimize efficiency of data of a mobile network service flows from a 3GPP network to a Gi-LAN network. Therefore, a traffic steering policy (Traffic Steering Policy) emerges.

How to charge based on a traffic steering policy, there is no solution at present.

### SUMMARY

Embodiments of the present invention provide a charging method and apparatus, so as to resolve a prior-art problem that there is no solution at present to charging based on a traffic steering policy.

According to a first aspect, a charging method is provided, including: after receiving a data packet, determining, by a charging trigger entity according to identification information carried in the data packet, a traffic steering policy used by the data packet, where the traffic steering policy indicates a service enabler that processes the data packet; and sending, by the charging trigger entity, usage information of the traffic steering policy to a charging system, where the usage information of the traffic steering policy is used for charging.

The traffic steering policy used by the data packet is determined according to the identification information carried in the data packet, and the usage information of the traffic steering policy used for charging is sent to the charging system, so that charging based on the traffic steering policy is implemented.

With reference to the first aspect, in a first possible implementation of the first aspect, before the determining, by a charging trigger entity according to identification information carried in the data packet, a traffic steering policy used by the data packet, the method further includes: obtaining, by the charging trigger entity, a correspondence between the identification information and the traffic steering policy; and the determining, by a charging trigger entity according to identification information carried in the data packet, a traffic steering policy used by the data packet includes: determining, by the charging trigger entity according to the correspondence, the traffic steering policy used by the data packet.

Because the correspondence between the identification information of the data packet and the traffic steering policy used by the data packet is configured, the charging trigger entity may determine, according to the correspondence, the traffic steering policy used by the data packet.

With reference the first aspect or the first possible implementation of the first aspect, in a second possible implementation, the usage information of the traffic steering policy includes attribute information of the service enabler that processes the data packet, and further includes at least one of time information of using the traffic steering policy or traffic information of the data packet that uses the traffic steering policy.

Therefore, the charging system charges more flexibly based on the traffic steering policy.

With reference to any one of the first aspect, or the first and the second possible implementations of the first aspect, in a third possible implementation, the charging trigger entity is a policy and charging enforcement function PCEF entity, a traffic detection function TDF entity, a classifier, or a service enabler.

Difference network elements serve as the charging trigger entity, so that network resources can be appropriately allocated according to actual requirements.

With reference to any one of the first aspect, or the first to the third possible implementations of the first aspect, in a fourth possible implementation, the charging trigger entity sends the usage information of the traffic steering policy to the charging system when a preset reporting condition is met, where the preset reporting condition includes instant reporting, reporting within a specified time period, or reporting when a specified capacity is reached.

With reference to any one of the first aspect, or the first to the fourth possible implementations of the first aspect, in a fifth possible implementation, the traffic steering policy further indicates a sequence for processing the data packet by the service enabler that processes the data packet.

According to a second aspect, a charging method is provided, including: receiving, by a service enabler, a data packet, and determining, according to processing indication information carried in the data packet, to process the data packet; processing, by the service enabler, the data packet; and sending, by the service enabler, usage information of the service enabler to a charging system, where the usage information of the service enabler includes attribute information of the service enabler, and further includes at least one of time information, event information, or traffic information of processing the data packet by the service enabler.

The service enabler generates and reports, to the charging system, the usage information of the service enabler, so that charging based on the service enabler is implemented.

The event information of processing the data packet by the service enabler includes a quantity of times of performing processing by the service enabler.

With reference to the second aspect, in a first possible implementation of the second aspect, the processing indication information includes an identifier of the service enabler or identification information of the data packet.

With reference to the second aspect or the first possible implementation of the second aspect, in a second possible implementation, the method further includes: when the processing indication information includes the identification information of the data packet, before receiving the data packet, obtaining, by the service enabler, a correspondence between identification information and a traffic steering policy; and the determining, according to processing indication information carried in the data packet, to process the data packet includes: determining, according to the identification information carried in the data packet and the correspondence, to process the data packet.

With reference to any one of the second aspect, or the first and the second possible implementations of the second aspect, in a third possible implementation, the service enabler sends the usage information of the service enabler to the charging system by using a classifier.

If there are multiple service enablers, the classifier is used to report the usage information, so that establishment of an interface that is between the charging system and each service enabler and that is used to receive usage information of each service enabler can be avoided. Therefore, pressure of the charging system can be reduced.

With reference to any one of the second aspect, or the first to the third possible implementations of the second aspect, in a fourth possible implementation, the data packet further carries a traffic steering policy identifier, the service enabler sends the usage information of the service enabler to the charging system by using a TSSF, the usage information of the service enabler further includes the traffic steering policy identifier, and the traffic steering policy identifier is used to associate multiple service enablers.

If there are multiple service enablers, usage information of the service enablers is associated according to the traffic steering policy identifier. Therefore, the charging system can charge more flexibly, for example, charge a user that uses a particular traffic steering policy at a discount.

With reference to any one of the second aspect, or the first to the fourth possible implementations of the second aspect, in a fifth possible implementation, the service enabler sends the usage information of the service enabler to the charging system when a preset reporting condition is met, where the preset reporting condition includes instant reporting, reporting within a specified time period, or reporting when a specified capacity is reached.

According to a third aspect, a charging apparatus is provided, including a processor, an input interface, an output interface, and a memory, where the processor reads a program in the memory, and performs the method according to the first aspect.

According to a fourth aspect, a charging apparatus is provided, including a processor, an input interface, an output interface, and a memory, where the processor reads a program in the memory, and performs the method according to the second aspect.

According to a fifth aspect, a computer readable storage medium is provided, where the computer readable storage medium stores executable program code, and the program code is used to implement the method according to the first aspect.

According to a sixth aspect, a computer readable storage medium is provided, where the computer readable storage medium stores executable program code, and the program code is used to implement the method according to the second aspect.

According to a seventh aspect, a charging apparatus is provided, including a module that is configured to implement the method according to the first aspect.

According to an eighth aspect, a charging apparatus is provided, including a module that is configured to implement the method according to the second aspect.

According to the charging method in the embodiments of the present invention, the traffic steering policy used by the data packet is determined according to the identification information carried in the data packet, and the usage information of the traffic steering policy used for charging is sent to the charging system, so that charging based on the traffic steering policy is implemented. The service enabler generates and reports, to the charging system, the usage information of the service enabler, so that charging based on the service enabler is implemented.

### BRIEF DESCRIPTION OF DRAWINGS

FIG. 1 is a schematic diagram of a network architecture applied to an embodiment of the present invention;
FIG. 2 is a schematic flowchart of a charging method 200 based on a traffic steering policy according to an embodiment of the present invention;
FIG. 3 is a schematic flowchart of a charging method 300 based on a service enabler according to an embodiment of the present invention;
FIG. 4 is a schematic diagram of another network architecture applied to an embodiment of the present invention;
FIG. 5 is a schematic flowchart of a charging method 500 based on a traffic steering policy according to an embodiment of the present invention;
FIG. 6 is a schematic flowchart of a charging method 600 based on a service enabler according to an embodiment of the present invention;
FIG. 7 is a schematic structural diagram of hardware of a computer device according to an embodiment of the present invention;
FIG. 8 is a schematic structural diagram of a charging trigger entity 800 according to an embodiment of the present invention; and
FIG. 9 is a schematic structural diagram of a service enabler 900 according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

The following further describes the embodiments of the present invention in detail with reference to the accompanying drawings of this specification. It should be understood that the embodiments described herein are merely used to explain the present invention but are not intended to limit the present invention.

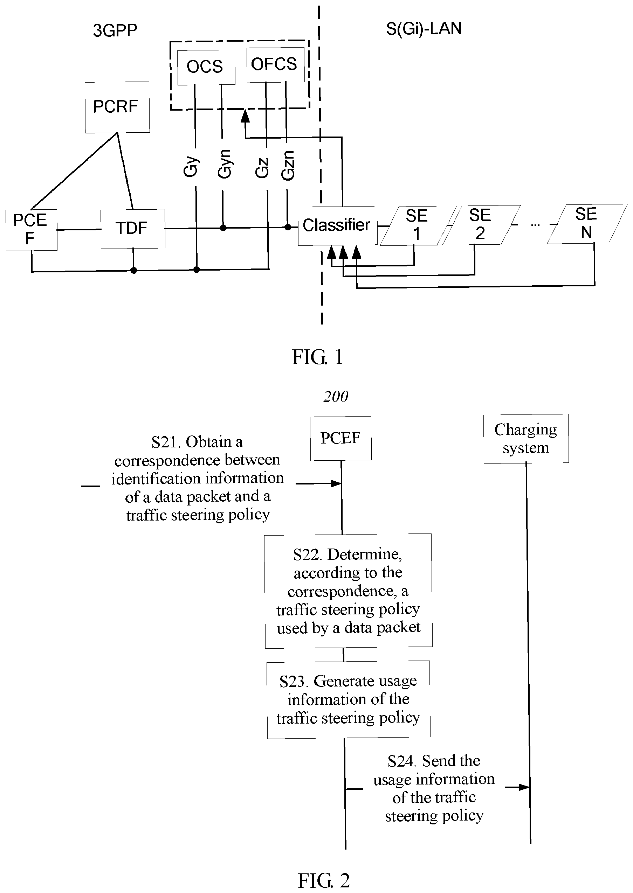

FIG. 1 is a schematic diagram of a network architecture according to an embodiment of the present invention. An SE1, an SE2, and an SEN in the figure are service enablers. In this embodiment of the present invention, a function of performing a traffic steering policy is added to a policy and charging enforcement function (Policy and Charging Enforcement Function, PCEF for short) entity or a traffic detection function (Traffic Detection Function, TDF for short) entity. The PCEF entity or the TDF entity may integrate with a data packet parsing function, that is, may support parsing of an application layer L7 and parsing of a data flow L3/L4. The PCEF entity or the TDF entity may further integrate with a function of traffic steering policy control. The PCEF entity or the TDF entity detects a data packet that flows through a 3GPP network, adds label information to the data packet after determining, according to identification information of the data packet, a traffic steering policy used by the data packet. The data packet to which the label information is added flows through a service enabler in an S(Gi)-LAN. The service enabler parses the label information of the data packet, determines a traffic steering policy used by the data packet, and performs traffic steering control according to the determined traffic steering policy. In the figure, the PCEF entity still reuses a Gy interface and a Gz interface to interact with an online charging system (Online Charging System, OCS) and an offline charging system (Offline Charging System, OFCS for short), and the TDF entity still reuses a Gyn interface and a Gzn interface to interact with the OCS and the OFCS. No new network element needs to be introduced in an implementation using such an architecture, and it is easier to operate in a specific implementation process.

FIG. 2 is a schematic flowchart of a charging method 200 based on a traffic steering policy according to an embodiment of the present invention. In a specific implementation process, a charging trigger entity is a PCEF entity or a TDF entity in the network architecture shown in FIG. 1. The PCEF entity is used as an example to describe the charging method 200 below.

S21. A PCEF entity obtains a correspondence between identification information of a data packet and a traffic steering policy.

Specifically, the PCEF entity may obtain the correspondence in the following manners: A PCRF entity delivers the correspondence to the PCEF entity; the PCEF entity obtains the correspondence from a server according to a traffic steering policy identifier delivered by a PCRF entity; or an administrator configures the correspondence in the PCEF entity.

S22. After receiving a data packet, the PCEF entity detects identification information of the data packet, and determines, according to the correspondence, a traffic steering policy used by the data packet, where the traffic steering policy indicates a service enabler that processes the data packet.

Optionally, the traffic steering policy further indicates a sequence for processing the data packet by the service enabler that processes the data packet.

That the service enabler processes the data packet includes: using a service provided by the service enabler for the data packet, for example, performing a function such as firewall, load balance, video acceleration, advertisement, compression decoding, and antivirus processing.

For example, the traffic steering policy is SE1-SE3-SE6, which indicates that service enablers SE1, SE3, and SE6 need to process the data packet, and a processing sequence is the SE1, the SE3, and the SE6.

The identification information of the data packet may be at least one of an application ID (Application ID) or a service flow filter (service flow filter). For example, the service flow filter may be an IP quintuple specifically including a source IP address, a source port, a destination IP address, a destination port, and a transport layer protocol.

Optionally, after the PCEF entity determines, according to the identification information of the data packet, the traffic steering policy used by the data packet, the method further includes: adding, by the PCEF entity, label information of the traffic steering policy to the data packet, where the label information is used to indicate a service enabler through which the data packet flows and a sequence.

The label information includes an identifier of the service enabler, and may be specifically an IP address of the service enabler. For example, the traffic steering policy is SE1-SE3-SE6, and the label information that is of the traffic steering policy and that is added by the PCEF entity may be 192.168.200.201-192.168.200.203-192.168.200.206, where 192.168.200.201, 192.168.200.203, and 192.168.200.206 are respectively IP addresses of the service enablers SE1, SE3, and SE6.

The label information is implemented in the following two optional manners:
Manner 1: The label information includes a routing table formed by service enablers that process the data packet.

In this manner, the data packet first flows into a classifier after flowing through a 3GPP network to an S(Gi)-LAN; the classifier parses the label information of the data packet, and sends, according to the label information, the data packet to a first service enabler through which the data packet flows; and the first service enabler parses the label information of the data packet after receiving the data packet, determines, according to the label information, that the first service enabler needs to process the data packet, such as parent control and antivirus processing, and sends, according to the label information, the data packet to a second service enabler through which the data packet flows; and so on. For example, the service enablers that process the data packet are the SE1, the SE3, and the SE6, and the label information may be 192.168.200.201-192.168.200.203-192.168.200.206. The service enablers SE1, SE3, and SE6 respectively provide a compression service, an antivirus service, and an acceleration service. The classifier sends the data packet to the service enabler SE1 after parsing the label information. The SE1 receives the data packet, parses the label information, determines that the data packet needs to be sent to the SE3, and sends the data packet to the service enabler SE3 after compressing the data packet. The SE3 receives the data packet, parses the label information, determines that the data packet needs to be sent to the SE6, and sends the data packet to the service enabler SE6 after performing antivirus processing on the data packet. The SE6 receives the data packet, parses the label information, and determines that the data packet is not sent to another service enabler; and after acceleration is performed on the data packet, the traffic steering policy is completed for the data packet.

Manner 2: The label information indicates all service enablers and whether each service enabler processes the data packet.

In this manner, the data packet first flows into a classifier after flowing through a 3GPP network to an S(Gi)-LAN. The classifier parses the label information of the data packet, and sends the data packet to a first service enabler that connects to the classifier in the S(Gi)-LAN. After receiving the data packet, the first service enabler parses the label information of the data packet, and determines whether the first service enabler needs to process the data packet. If determining that the first service enabler needs to process the data packet, the first service enabler processes the data packet, such as parent control and antivirus processing, and then sends the data packet to a second service enabler that connects to the first service enabler in the S(Gi)-LAN, and so on. If determining that the first service enabler does not need to process the data packet, the first service enabler does not process the data packet, and sends the data packet to a second service enabler that connects to the first service enabler in the S(Gi)-LAN. For example, there are six service enablers SE1, SE2, SE3, SE4, SE5, and SE6 in total, which respectively provide a compression service, an advertisement service, an antivirus service, a firewall service, a load balance service, and an acceleration service. The SE1 connects to the classifier, service enablers that need to process the data packet are the SE1, the SE3, and the SE6, and the label information may be 192.168.200.201(Y)-192.168.200.202(N)-192.168.200.203(Y)-192.168.200.204(N)-192.168.200.205(N)-192.168.200.206(Y). Y indicates that a service enabler needs to process a data packet, and N indicates that a service enabler does not process a data packet. The classifier sends the data packet to the SE1 after parsing the label information; and the SE1 parses the label information, determines that the SE1 needs to process the data packet, and sends the data packet to the SE2 after compressing the data packet. After receiving the data packet, the SE2 parses the label information, determines that the SE2 does not insert an advertisement in the data packet, and directly sends the data packet to the SE3. After receiving the data packet, the SE3 parses the label information, determines that the SE3 needs to process the data packet, and sends the data packet to the SE4 after performing antivirus processing on the data packet. Subsequent processes are similar, and end with that the data packet flows into the final service enabler SE6. After the SE6 completes the foregoing process, the traffic steering policy is completed for the data packet.

S23. The PCEF entity generates usage information of the traffic steering policy, where the usage information of the traffic steering policy is used for charging.

Specifically, the usage information of the traffic steering policy includes attribute information of the service enabler that processes the data packet, and further includes at least one of time information of using the traffic steering policy or traffic information of the data packet that uses the traffic steering policy.

Optionally, the attribute information of the service enabler may be configured in the PCEF entity before the data packet is received.

Optionally, the attribute information of the service enabler that processes the data packet includes at least one of name information of the service enabler, service provider information of the service enabler, identification information used to uniquely identify the service enabler, address information of the service enabler, or type information of the service enabler.

Optionally, the time information of using the traffic steering policy includes a start time at which the traffic steering policy is used, or includes a start time (Start) and a stop time (Stop) at which the traffic steering policy is used, or includes a time period between a start time and a stop time at which the traffic steering policy is used.

When multiple data packets use a same traffic steering policy, the traffic information of the data packet that uses the traffic steering policy may be a sum of traffic of the multiple data packets.

Optionally, before generating the usage information of the traffic steering policy, the PCEF entity requests, from an OCS, credit authorization of using the traffic steering policy by a user. After the PCEF entity obtains the credit authorization, step S23 is performed.

S24. The PCEF entity sends the usage information of the traffic steering policy to a charging system, so that the charging system charges according to the usage information of the traffic steering policy.

Optionally, the PCEF sends the usage information of the traffic steering policy to the charging system when a preset reporting condition is met, and the preset reporting condition includes instant reporting, reporting within a specified time period, or reporting when a specified capacity is reached.

Specifically, the instant reporting may be reporting when the PCEF entity detects a first data packet that uses the traffic steering policy, for example, reporting a start time at which the traffic steering policy is used; or may be reporting when the PCEF entity determines that the traffic steering policy is completed, for example, reporting a start time and a stop time at which the traffic steering policy is used.

The reporting within a specified time period may be reporting within a preset time period, for example, may be reporting at a fixed time within a preset time period.

The reporting when a specified capacity is reached may be reporting when a preset storage capacity is reached, for example, may be reporting when a charging data record (Charging DataRecord, CDR) bill capacity reaches a preset capacity of 2 M.

Specifically, if a charging manner is online charging, the PCEF entity reports the usage information of the traffic steering policy to an OCS. If the charging manner is offline charging, the PCEF entity generates a CDR bill according to the usage information of the traffic steering policy, and reports the generated CDR bill to an OFCS.

In another possible implementation, the charging trigger entity is a classifier in the network architecture shown in FIG. 1. The classifier is a unified egress/ingress deployed in a Gi-LAN network. The charging method 200 may be performed by the classifier (Classifier), and a specific process includes the following steps (which are not shown in the figure).

S21'. A classifier obtains a correspondence between identification information of a data packet and a traffic steering policy.

Specifically, the classifier obtains the correspondence from a PCEF entity or a TDF entity.

S22'. After receiving a data packet, the classifier detects identification information of the data packet, and determines, according to the correspondence, a traffic steering policy used by the data packet, where the traffic steering policy indicates a service enabler that processes the data packet.

Optionally, the traffic steering policy further indicates a sequence for processing the data packet by the service enabler that processes the data packet.

Optionally, after determining, according to the correspondence, the traffic steering policy used by the data packet, the classifier notifies the PCEF entity of the traffic steering policy used by the data packet. The PCEF entity requests, from an online charging system, credit authorization of using the traffic steering policy by a user. After obtaining the credit authorization, the PCEF entity instructs the classifier to generate usage information of the traffic steering policy.

S23'. The classifier adds label information of the traffic steering policy to the data packet.

The implementation of the label information is described in the foregoing S22, and details are not described herein again.

S24'. The classifier generates usage information of the traffic steering policy, where the usage information of the traffic steering policy includes attribute information of the service enabler that processes the data packet, and further includes at least one of time information of using the traffic steering policy or traffic information of the data packet that uses the traffic steering policy.

Content of the attribute information of the service enabler that processes the data packet, the time information of using the traffic steering policy, and the traffic information of the data packet that uses the traffic steering policy is described in detail above, and details are not described herein again.

Optionally, the attribute information of the service enabler may be configured in the classifier before the data packet is received.

Further, if there is an interface between the classifier and the charging system, the classifier may directly report the usage information of the traffic steering policy to the charging system; and if there is no interface between the classifier and the charging system, the classifier reports the usage information of the traffic steering policy to the charging system by using the PCEF entity or the TDF entity.

Some feature descriptions of the embodiment in which the PCEF entity serves as the charging trigger entity are applicable to the embodiment in which the classifier serves as the charging trigger entity, and details are not described herein again.

In a possible implementation, the usage information of the traffic steering policy may include parameters shown in Table 1:

**Table 1**

| **Parameter name** | **Description** |
|---|---|
| Traffic steering policy ID(s) | Identification information of a traffic steering policy |
| SE List (Group) | Attribute information of each SE that processes a data packet, where the attribute information of the SE includes the following conditional parameters (Conditional Parameters): |
| | (1). SE Name (an SE name) |
| | (2). SE Providers (SE service providers) |
| | (3). SE ID (an SE identity) |
| | (4). SE Add (an SE address) |
| | (5). SE Type (an SE type such as firewall, video acceleration, decompression, parent control, where the parameter may be indicated by using code) |
| Start | Start time at which a traffic steering policy is used |
| Stop | Stop time at which a traffic steering policy is used |
| Volume | Traffic of using a traffic steering policy |

The parameter Volume indicates a sum of data traffic that is used for performing a same traffic steering policy and that is obtained by the charging trigger entity by means of statistics collecting.

In a possible implementation, the PCEF entity, the TDF entity, and the classifier determine a time at which the data packet using the traffic steering policy is first detected as a start time at which the traffic steering policy is used. After first detecting the data packet that uses the traffic steering policy, if not detecting, within a specified time threshold, the data packet that uses the traffic steering policy, the charging trigger entity determines a stop time of the time threshold as a stop time at which the traffic steering policy is used.

According to the technical solution in this embodiment of the present invention, the traffic steering policy used by the data packet is determined according to the identification information carried in the data packet, and the usage information of the traffic steering policy used for charging is sent to the charging system, so that charging based on the traffic steering policy is implemented. In addition, the usage information of the traffic steering policy includes the attribute information of the service enabler that processes the data packet, and further includes the at least one of time information of using the traffic steering policy or traffic information of the data packet that uses the traffic steering policy. Therefore, the charging system charges more flexibly based on the traffic steering policy.

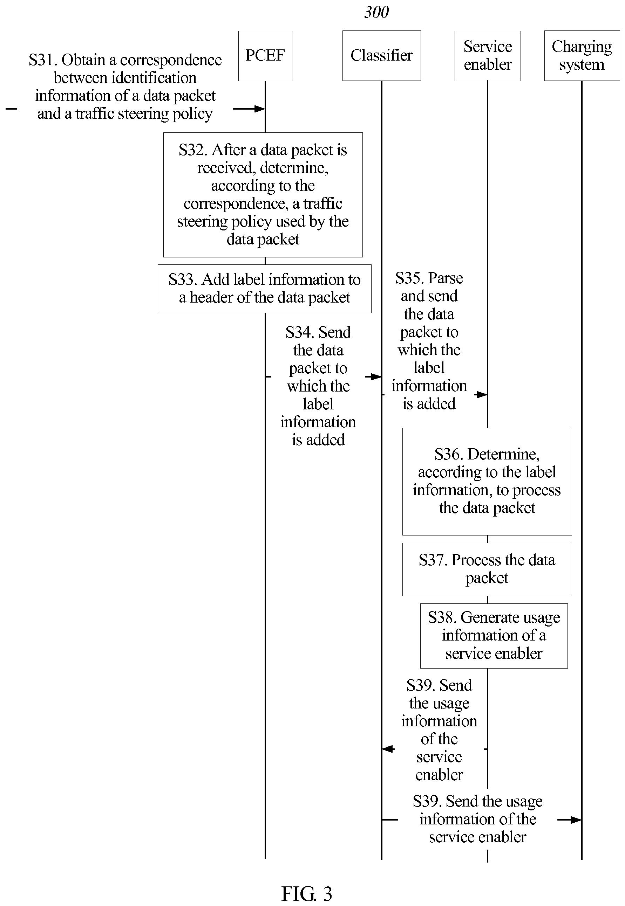

FIG. 3 is a schematic flowchart of a charging method 300 based on a service enabler according to an embodiment of the present invention. In a specific implementation process, a charging trigger entity is a service enabler in the network architecture shown in FIG. 1. In this embodiment, a charging interface between a classifier and a charging system is added, and a reporting interface between each service enabler and the classifier is added.

S31. A PCEF entity obtains a correspondence between identification information of a data packet and a traffic steering policy.

An obtaining manner is described in S21 in the embodiment in FIG. 2, and details are not described herein again.

S32. After receiving a data packet, the PCEF entity determines, according to the correspondence, a traffic steering policy used by the data packet, where for details, refer to specific related descriptions in S22 in the embodiment in FIG. 2.

Optionally, after determining, according to the correspondence, the traffic steering policy used by the data packet, the PCEF entity requests, from an OCS, credit authorization of using the traffic steering policy by a user.

S33. The PCEF entity adds label information of the traffic steering policy to a header of the data packet, where for the label information, refer to related descriptions in S22 in the embodiment in FIG. 2.

S34. The PCEF entity sends, to a classifier, the data packet to which the label information is added.

S35. The classifier parses the label information in the received data packet, and sends the data packet to a corresponding service enabler.

Specifically, if the label information includes a routing table formed by service enablers that process the data packet, the classifier sends the data packet to a first service enabler that processes the data packet, and the data packet successively jumps to a next service enabler according to the routing table. If the label information indicates all service enablers and whether each service enabler processes the data packet, the classifier sends the data packet to a first service enabler that connects to the classifier.

S36. After receiving the data packet, the service enabler determines, according to the label information carried in the data packet, that the service enabler needs to process the data packet.

S37. The service enabler processes the data packet.

After completing processing on the data packet, the service enabler sends the data packet to a next service enabler according to the label information.

S38. The service enabler generates usage information of the service enabler, where the usage information of the service enabler includes attribute information of the service enabler, and further includes at least one of time information, event information, or traffic information of processing the data packet by the service enabler.

Optionally, the time information of processing the data packet by the service enabler includes a start time and a stop time at which the service enabler performs processing. The event information of processing the data packet by the service enabler includes a quantity of times of performing processing by the service enabler, and may further include a start time at which processing is performed. The traffic information of processing the data packet by the service enabler includes traffic flowing into the service enabler and traffic flowing out the service enabler, and may further include a start time at which processing is performed.

S39. The service enabler sends the usage information of the service enabler to a charging system, so that the charging system charges according to the usage information of the service enabler.

Optionally, the service enabler sends the usage information of the service enabler to the charging system when a preset reporting condition is met, and the preset reporting condition includes instant reporting, reporting within a specified time period, or reporting when a specified capacity is reached.

Specifically, the instant reporting may be reporting when the service enabler completes processing on the data packet. For example, if the traffic steering policy includes that an SE1, an SE3, and an SE6 process the data packet, the SE1 reports usage information of the SE1 when completing processing on the data packet, the SE3 reports usage information of the SE3 when completing processing on the data packet, and the SE6 reports usage information of the SE6 when completing processing on the data packet.

The reporting within a specified time period may be reporting within a preset time period, for example, may be reporting at a fixed time within a preset time period.

The reporting when a specified capacity is reached may be reporting when a preset storage capacity is reached, for example, may be reporting when a charging data record (Charging DataRecord, CDR) bill capacity reaches a preset capacity of 2 M.

Optionally, the service enabler sends the usage information of the service enabler to the charging system by using the classifier.

Optionally, the usage information of the service enabler may further include a traffic steering policy identifier. The classifier associates, according to the traffic steering policy identifier, the usage information of the service enabler that is generated by the service enabler that processes the data packet, and then sends associated usage information to the charging system.

For a reporting occasion on which the classifier sends the usage information of the service enabler to the charging system, refer to the preset reporting condition in the embodiment in FIG. 2. Details are not described herein again.

Steps from S31 to S34 may be performed by a TDF entity, and details are not described herein again.

In actual application, there may be different charging modes for different service enablers, for example, charging according to a time, charging according to an event, and charging according to traffic. For example, if a function of a service enabler is antivirus processing, charging may be performed according to a quantity of times of antivirus processing. If charging is performed according to a time, the usage information of the service enabler includes the time information of processing the data packet; if charging is performed according to an event, the usage information of the service enabler includes the event information of processing the data packet; and if charging is performed according to traffic, the usage information of the service enabler includes the traffic information of processing the data packet.

When charging is performed for the service enabler according to a time length, in an implementation, the usage information of the service enabler that is reported by the service enabler may include parameters shown in Table 2:

**Table 2**

| **Parameter name** | **Description** |
|---|---|
| Traffic steering policy ID(s) | Identification information of a traffic steering policy |
| SE | Attribute information of a service enabler that processes a data packet includes: |
| | (1). SE Name |
| | (2). SE Providers |
| | (3). SE ID |
| | (4). SE Add |
| | (5). SE Type |
| Start Time | Start time at which a service enabler performs processing |
| End Time | Stop time at which a service enabler performs processing |

When charging is performed for the service enabler according to an event, in an implementation, the usage information of the service enabler that is reported by the service enabler may include parameters shown in Table 3:

**Table 3**

| **Parameter name** | **Description** |
|---|---|
| Traffic steering policy ID(s) | Identification information of a traffic steering policy |
| SE | Attribute information of a service enabler that processes a data packet includes: |
| | (1). SE Name |
| | (2). SE Providers |
| | (3). SE ID |
| | (4). SE Add |
| | (5). SE Type |
| Event Time | A quantity of times of performing processing by a service enabler |
| Start Time | Start time at which a service enabler performs processing |

When charging is performed for the service enabler according to traffic, in an implementation, the usage information of the service enabler that is reported by the service enabler may include parameters shown in Table 4:

**Table 4**

| **Parameter name** | **Description** |
|---|---|
| Traffic steering policy ID(s) | Identification information of a traffic steering policy |
| SE | Attribute information of a service enabler that processes a data packet includes: |
| | (1). SE Name |
| | (2). SE Providers |
| | (3). SE ID |
| | (4). SE Add |
| | (5). SE Type |
| Volume In | Traffic flowing into a service enabler |
| Volume Out | Traffic flowing out a service enabler |
| Start Time | Start time at which a service enabler performs processing |

In an implementation, if in service enablers that process the data packet, charging is performed for the SE1 in a time length manner, charging is performed for the SE2 in an event manner, and charging is performed for the SE3 in a data traffic manner, usage information summed up by the classifier by means of association may include parameters shown in Table 5:

**Table 5**

| **Parameter name** | **Description** |
|---|---|
| Traffic steering policy ID(s) | Identification information of a traffic steering policy |
| SE1 | Attribute information of SE1 includes: |
| | SE1 Name; |
| | SE1 Providers; |
| | SE1 ID; |
| | SE1 Add; and |
| | SE1 Type. |
| | Start time: a start time at which an SE1 performs processing |
| | End Time: a stop time at which an E1 performs processing |
| SE2 | Attribute information of SE2 includes: |
| | SE2 Name; |
| | SE2 Providers; |
| | SE2 ID; |
| | SE2 Add; and |
| | SE2 Type. |
| | Event time: a quantity of times of performing processing by SE2 |
| | Start time: a start time at which an SE2 performs processing |
| SE3 | Attribute information of SE3 includes: |
| | SE3 Name; |
| | SE3 Providers; |
| | SE3 ID; |
| | SE3 Add; and |
| | SE3 Type. |
| | Volume In: traffic flowing into SE3 |
| | Volume Out: traffic flowing out SE3 |
| | Start time: a start time at which an SE3 performs processing |

According to the technical solution in this embodiment of the present invention, the service enabler generates and reports, to the charging system, the usage information of the service enabler, so that charging based on the service enabler is implemented. In addition, if there are multiple service enablers, the classifier is used to report the usage information, so that establishment of an interface that is between the charging system and each service enabler and that is used to receive usage information of each service enabler can be avoided. Therefore, pressure of the charging system can be reduced.

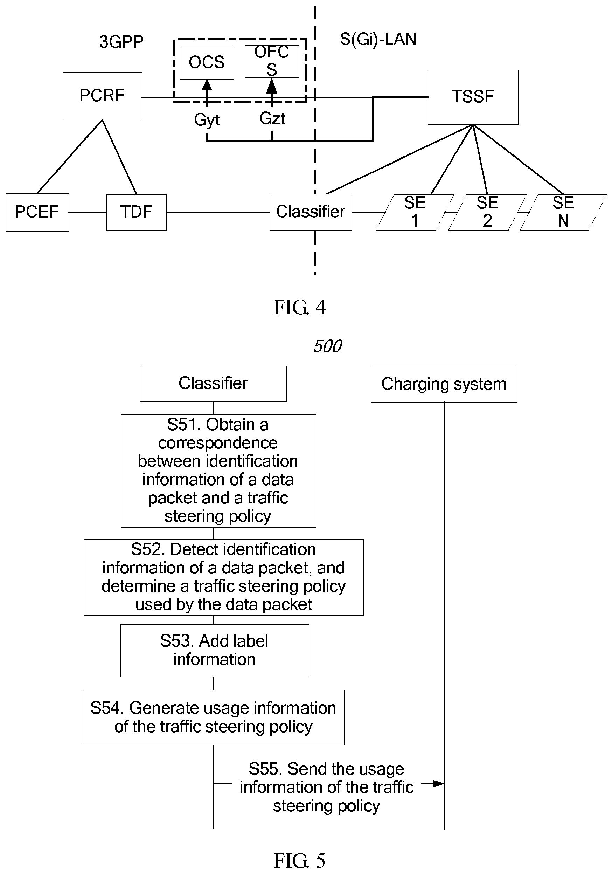

FIG. 4 is a schematic diagram of another network architecture according to an embodiment of the present invention. An SE1, an SE2, and an SEN in the figure are service enablers. According to a solution in this embodiment of the present invention, in an original PCC architecture, a traffic steering support function (Traffic Steering Support Function, TSSF) entity is added to implement traffic steering policy control. The TSSF entity integrates with a traffic steering policy control and reporting function to implement traffic steering control on a Gi-LAN side. As a software defined networking (Software Defined Network, SDN for short) controller (Controller), the TSSF entity may be implemented on a 3GPP side, or may be implemented on an S(Gi)LAN side. A charging interface between the TSSF entity and the charging system is added in the figure. For example, a charging interface between the TSSF entity and an OCS is defined as Gyt, and a charging interface between the TSSF entity and an OFCS is defined as Gzt. An interface between the SDN Controller on the Gi-LAN side and a classifier is reused between the TSSF entity and the classifier (by using an Openflow protocol). Compared with the network architecture in the embodiment in FIG. 1, the TSSF entity is added to the original PCC architecture to implement traffic steering policy control, and this can reduce pressure of a PCEF entity or a TDF entity.

FIG. 5 is a schematic flowchart of a charging method 500 based on a traffic steering policy according to an embodiment of the present invention. In a specific implementation process, a charging trigger entity is a classifier in the network architecture shown in FIG. 4.

S51. A classifier obtains a correspondence between identification information of a data packet and a traffic steering policy.

Optionally, the classifier obtains the correspondence from a TSSF entity.

Specifically, the TSSF entity may obtain the correspondence in the following manners: APCRF entity delivers the correspondence to the TSSF entity; the TSSF entity obtains the correspondence from a server according to a traffic steering policy identifier delivered by a PCRF entity; or an administrator configures the correspondence in the TSSF entity.

S52. After receiving a data packet, the classifier detects identification information of the data packet, and determines, according to the correspondence, a traffic steering policy used by the data packet, where the traffic steering policy indicates a service enabler that processes the data packet.

Optionally, the traffic steering policy further indicates a sequence for processing the data packet by the service enabler that processes the data packet.

Optionally, after determining, according to the correspondence, the traffic steering policy used by the data packet, the classifier notifies the TSSF entity of the traffic steering policy used by the data packet. The TSSF entity requests, from an OCS, credit authorization of using the traffic steering policy by a user. After obtaining the credit authorization, the TSSF entity instructs the classifier to generate usage information of the traffic steering policy.

S53. The classifier adds label information of the traffic steering policy to the data packet.

The implementation of the label information is described in the foregoing S22, and details are not described herein again.

S54. The classifier generates usage information of the traffic steering policy, where the usage information of the traffic steering policy is used for charging, and the usage information of the traffic steering policy includes attribute information of the service enabler that processes the data packet, and further includes at least one of time information of using the traffic steering policy or traffic information of the data packet that uses the traffic steering policy.

Content of the attribute information of the service enabler that processes the data packet, the time information of using the traffic steering policy, and the traffic information of the data packet that uses the traffic steering policy is described in detail above, and details are not described herein again.

S55. The classifier sends the usage information of the traffic steering policy to a charging system, so that the charging system performs charging processing according to the usage information of the traffic steering policy.

Optionally, the classifier sends the usage information of the traffic steering policy to the charging system when a preset reporting condition is met, and the preset reporting condition includes instant reporting, reporting within a specified time period, or reporting when a specified capacity is reached.

For specific content of the preset reporting condition, refer to related parts in the embodiment in FIG. 2. Details are not described herein again.

Specifically, the classifier sends the usage information of the traffic steering policy to the charging system by using the TSSF entity.

In a possible implementation, the usage information that is of the traffic steering policy and that is generated by the classifier may include the parameters shown in Table 1.

In another possible implementation, the charging trigger entity is a service enabler in the network architecture shown in FIG. 4. An interface between an SDN controller and a service enabler is reused between the service enabler and a TSSF entity. The charging method 500 may be performed by a first service enabler that connects to a classifier, and a specific process includes the following steps (which are not shown in the figure).

S51'. A first service enabler that connects to a classifier obtains a correspondence between identification information of a data packet and a traffic steering policy.

Specifically, the first service enabler that connects to the classifier obtains the correspondence from the TSSF.

S52'. After receiving a data packet, the first service enabler that connects to the classifier detects identification information of the data packet, and determines, according to the correspondence, a traffic steering policy used by the data packet, where the traffic steering policy indicates a service enabler that processes the data packet.

Optionally, the traffic steering policy further indicates a sequence for processing the data packet by the service enabler that processes the data packet.

Specifically, the first service enabler that connects to the classifier determines, according to the traffic steering policy, that the first service enabler needs to process the data packet, and after processing is completed, sends the data packet to a next service enabler that connects to the first service enabler. The next service enabler determines, according to the identification information of the data packet, whether the data packet uses the traffic steering policy. If determining that the data packet uses the traffic steering policy, the next service enabler determines, according to the traffic steering policy, that the next service enabler needs to process the data packet, and after completing processing, sends the data packet to a further next service enabler that connects to the next service enabler; if determining that the data packet does not use the traffic steering policy, the next service enabler does not process the data packet, and directly sends the data packet to a further next service enabler that connects to the next service enabler.

S53'. The first service enabler that connects to the classifier generates usage information of the traffic steering policy, where the usage information of the traffic steering policy includes attribute information of the service enabler that processes the data packet, and further includes at least one of time information of using the traffic steering policy or traffic information of the data packet that uses the traffic steering policy.

The attribute information of the service enabler that processes the data packet may be pre-configured in the first service enabler.

Content of the attribute information of the service enabler that processes the data packet, the time information of using the traffic steering policy, and the traffic information of the data packet that uses the traffic steering policy is described in detail above, and details are not described herein again.

S54'. The first service enabler that connects to the classifier sends the usage information of the traffic steering policy to a charging system.

Optionally, the usage information of the traffic steering policy is sent to the charging system when a preset reporting condition is met. For the specific preset reporting condition, refer to related content in the embodiment in FIG. 2. Details are not described herein again.

Specifically, the first service enabler that connects to the classifier sends the usage information of the traffic steering policy to the charging system by using the TSSF entity.

The traffic steering policy used by the data packet is determined according to the identification information carried in the data packet, and the usage information of the traffic steering policy used for charging is sent to the charging system, so that charging based on the traffic steering policy is implemented. In addition, the usage information of the traffic steering policy includes the attribute information of the service enabler that processes the data packet, and further includes the at least one of time information of using the traffic steering policy or traffic information of the data packet that uses the traffic steering policy. Therefore, the charging system charges more flexibly based on the traffic steering policy.

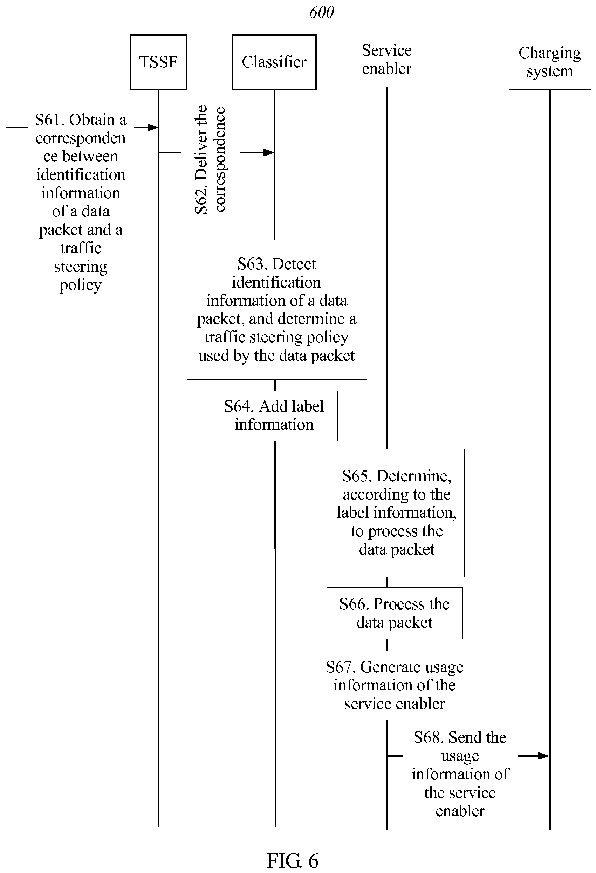

FIG. 6 is a schematic flowchart of a charging method 600 based on a service enabler according to an embodiment of the present invention. In a specific implementation process, a charging trigger entity is a service enabler in the network architecture shown in FIG. 4. In this embodiment, an interface between an SDN controller and a service enabler is reused between each service enabler and a TSSF entity.

S61. A TSSF entity obtains a correspondence between identification information of a data packet and a traffic steering policy.

An obtaining manner is described in S51 in the embodiment in FIG. 5, and details are not described herein again.

S62. The TSSF entity sends the correspondence to a classifier.

S63. After receiving a data packet, the classifier detects identification information of the data packet, and determines, according to the correspondence, a traffic steering policy used by the data packet.

Optionally, after determining, according to the correspondence, the traffic steering policy used by the data packet, the classifier notifies the TSSF entity of the traffic steering policy used by the data packet. The TSSF entity requests, from an OCS, credit authorization of using the traffic steering policy by a user. The TSSF entity notifies the classifier after obtaining the credit authorization.

S64. The classifier adds label information of the traffic steering policy to the data packet, and sends the data packet to a corresponding service enabler.

Specifically, if the label information includes a routing table formed by service enablers that process the data packet, the classifier sends the data packet to a first service enabler that processes the data packet, and the data packet successively jumps to a next service enabler according to the routing table. If the label information indicates all service enablers and whether each service enabler processes the data packet, the classifier sends the data packet to a first service enabler that connects to the classifier.

S65. After receiving the data packet, the service enabler determines, according to the label information carried in the data packet, that the service enabler needs to process the data packet.

S66. The service enabler processes the data packet.

After completing processing on the data packet, the service enabler sends the data packet to a next service enabler according to the label information.

S67. The service enabler generates usage information of the service enabler, where the usage information of the service enabler includes attribute information of the service enabler, and further includes at least one of time information, event information, or traffic information of processing the data packet by the service enabler.

The attribute information of the service enabler, and the time information, the event information, and the traffic information of processing the data packet by the service enabler are described in detail above, and details are not described herein again.

S68. The service enabler sends the usage information of the service enabler to a charging system.

Optionally, the service enabler sends the usage information of the service enabler to the charging system when a preset reporting condition is met. For the specific preset reporting condition, refer to related descriptions in the embodiment in FIG. 3. Details are not described herein again.

Specifically, the service enabler may report the usage information of the service enabler by using the TSSF entity. The usage information of the service enabler may further include a traffic steering policy identifier. The TSSF associates, according to the traffic steering policy identifier, the usage information of the service enabler that is generated by the service enabler that processes the data packet, and then sends associated usage information to the charging system. Alternatively, the service enabler may report the usage information of the service enabler by using the classifier. The classifier associates, according to the traffic steering policy identifier, the usage information of the service enabler that is generated by the service enabler that processes the data packet, and then sends associated usage information to the charging system.

For a reporting occasion on which the classifier and the TSSF entity sends the usage information of the service enabler to the charging system, refer to the preset reporting condition in the embodiment in FIG. 2. Details are not described herein again.

The service enabler generates and reports, to the charging system, the usage information of the service enabler, so that charging based on the service enabler is implemented. In addition, if there are multiple service enablers, the classifier or the TSSF entity is used to report the usage information, so that establishment of an interface that is between the charging system and each service enabler and that is used to receive usage information of each service enabler can be avoided, and association of the usage information of each service enabler that is performed by the charging system can also be avoided. Therefore, pressure of the charging system can be reduced.

In the embodiments in FIG. 3 and FIG. 6, a process in which the usage information of the service enabler is sent to the charging system for charging after being associated according to the traffic steering policy identifier is described. This process increases flexibility of a charging policy, in the charging system, for service enablers that perform a same traffic steering policy. For example, the charging policy may be set as follows: when an SE1 and an SE3 use a same traffic steering policy, the SE1 is free of charge.

An embodiment of the present invention further provides a charging method based on a service enabler, usage information of a service enabler is not associated in the method, and the method includes:
receiving, by a service enabler, a data packet, and determining, according to processing indication information carried in the data packet, to process the data packet; processing, by the service enabler, the data packet; and sending, by the service enabler, usage information of the service enabler to a charging system, where the usage information of the service enabler includes attribute information of the service enabler, and further includes at least one of time information, event information, or traffic information of processing the data packet by the service enabler.

The label information in the embodiments in FIG. 3 and FIG. 6 includes an identifier of the service enabler, and the label information is a specific implementation of the processing indication information.

The charging system may directly charge according to usage information reported by each service enabler, and does not consider a traffic steering policy used by each service enabler.

An embodiment of the present invention further provides a charging method based on a traffic steering policy. In the network architecture shown in FIG. 4, a TSSF entity delivers a correspondence between identification information of a data packet and a traffic steering policy to a service enabler indicated in a traffic steering policy. After receiving a data packet, the service enabler determines, according to identification information carried in the data packet and the correspondence, to process the data packet, and after completing processing on the data packet, sends the data packet to a next service enabler that needs to process the data packet. In an implementation, a first service enabler that processes the data packet and a final service enabler that processes the data packet generate usage information of the traffic steering policy, and the usage information specifically includes attribute information of service enablers that process the data packet and a traffic steering policy identifier, and further includes at least one of time information of using the traffic steering policy or traffic information of the data packet that uses the traffic steering policy. The service enabler sends the usage information of the traffic steering policy to the TSSF entity, and after performing association according to the traffic steering policy identifier, the TSSF entity sends associated usage information to a charging system for charging.

In a possible implementation, the first service enabler that processes the data packet determines a time at which a data packet using the traffic steering policy is first detected as a start time at which the traffic steering policy is used, and determines a time at which the final service enabler that processes the data packet completes processing on a final data packet that uses the traffic steering policy as a stop time at which the traffic steering policy is used.

In an implementation, the TSSF entity delivers a correspondence between identification information of a data packet and a traffic steering policy fragmentation identifier to a service enabler that needs to process a data packet. After the service enabler processes the data packet, reported usage information of the traffic steering policy carries a traffic steering policy fragmentation identifier. The TSSF entity associates usage information of the service enabler according to the traffic steering policy fragmentation identifier, and then sends associated usage information to the charging system for charging.

For example, if the traffic steering policy identifier is 3, and the traffic steering policy is SE1-SE3-SE6, a fragmentation identifier may be 3-1, 3-3, and 3-6. A correspondence between 3-1 and the identification information of the data packet is delivered to the service enabler SE1, a correspondence between 3-3 and the identification information of the data packet is delivered to the service enabler SE3, and a correspondence between 3-6 and the identification information of the data packet is delivered to the service enabler SE6. The TSSF entity may simultaneously deliver routing information to the SE1, the SE3, and the SE6. After the SE1, the SE3, and the SE6 report usage information of the service enablers to the TSSF entity, the TSSF entity associates the usage information of the service enablers according to the traffic steering policy identifier 3 in 3-1, 3-3, and 3-6.

In this embodiment, the service enabler determines, according to the identification information carried in the data packet, whether to process the data packet, and the identification information carried in the data packet is a specific implementation of processing indication information.

Some feature descriptions in the foregoing embodiments are applicable to this embodiment, and details are not described again.

According to the technical solution in this embodiment of the present invention, the correspondence is delivered to the service enabler, so that a process in which a classifier adds label information to the data packet is avoided, and pressure of the classifier is reduced.

An embodiment of the present invention further provides a charging method based on a service enabler. In the network architecture shown in FIG. 4, a TSSF entity delivers a correspondence between identification information of a data packet and a traffic steering policy to a service enabler indicated in a traffic steering policy. After receiving a data packet, the service enabler determines, according to identification information carried in the data packet and the correspondence, to process the data packet, and after completing processing on the data packet, sends the data packet to a next service enabler that needs to process the data packet. Each service enabler that processes the data packet generates usage information of each service enabler, and the usage information includes attribute information of each service enabler and a traffic steering policy identifier, and further includes at least one of time information, event information, or traffic information of processing the data packet by each service enabler. The service enablers send generated usage information of the service enablers to the TSSF entity, and the TSSF entity associates, according to the traffic steering policy identifiers, the usage information of the foregoing service enablers that process the data packet, and then sends associated usage information to a charging system for charging.

In an implementation, the TSSF entity delivers identification information of a data packet and a traffic steering policy fragmentation identifier to a service enabler that needs to process a data packet. After the service enabler processes the data packet, reported usage information of the service enabler carries a traffic steering policy fragmentation identifier. The TSSF entity associates the usage information of the service enabler according to the traffic steering policy fragmentation identifier, and then sends associated usage information to the charging system for charging.

For example, if the traffic steering policy identifier is 3, and the traffic steering policy is SE1-SE3-SE6, a fragmentation identifier may be 3-1, 3-3, and 3-6. A correspondence between 3-1 and the identification information of the data packet is delivered to the service enabler SE1, a correspondence between 3-3 and the identification information of the data packet is delivered to the service enabler SE3, and a correspondence between 3-6 and the identification information of the data packet is delivered to the service enabler SE6. The TSSF entity may simultaneously deliver routing information to the SE1, the SE3, and the SE6. After the SE1, the SE3, and the SE6 report usage information of the service enablers to the TSSF entity, the TSSF entity associates the usage information of the service enablers according to the traffic steering policy identifier 3 in 3-1, 3-3, and 3-6.

Some feature descriptions in the foregoing embodiments are applicable to this embodiment, and details are not described again.

According to the technical solution in this embodiment of the present invention, the correspondence is delivered to the service enabler, so that a process in which a classifier adds label information to the data packet is avoided, and pressure of the classifier is reduced.

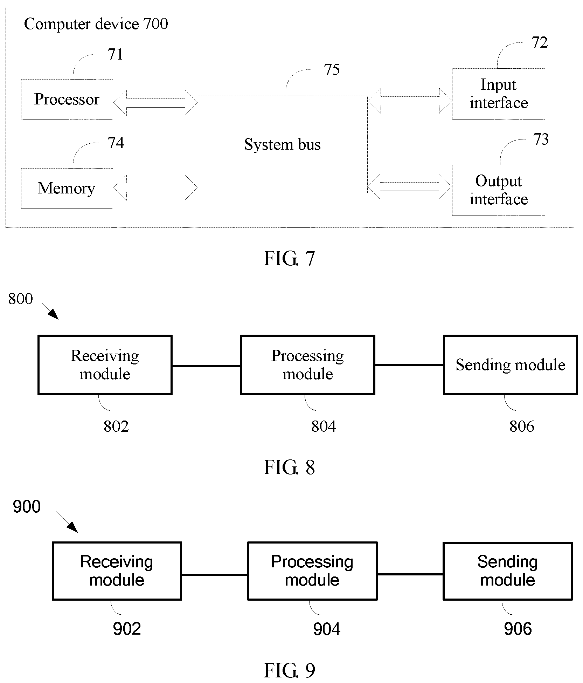

An embodiment of the present invention further provides a computer device 700, as shown in FIG. 7, including a processor 71, an input interface 72, an output interface 73, a memory 74, and a system bus 75.

The processor 71 is responsible for a logic operation and processing. When the computer device is a charging trigger entity, and when the charging trigger entity operates, the processor 71 reads a program in the memory 74, and the program is specifically:
after receiving a data packet, determining, according to identification information carried in the data packet, a traffic steering policy used by the data packet, where the traffic steering policy indicates a service enabler that processes the data packet; and sending usage information of the traffic steering policy to a charging system by using the output interface 73, where the usage information of the traffic steering policy is used for charging.

The memory 74 includes a memory and a hard disk, and may store data used by the processor 71 when performing an operation. The input interface 72 is configured to read data under the control of the processor 71, and the output interface 73 outputs data under the control of the processor 71.

A bus architecture may include any quantity of interconnecting buses and bridges, which specifically interconnect various circuits of one or more processors represented by the processor 71 and the memory and the hardware that are represented by the memory 74. The bus architecture may further link various other circuits such as a peripheral device, a voltage regulator, and a power management circuit. This is well known in the art, and therefore no further description is provided in this specification.

In this embodiment of the present invention, the charging trigger entity may be implemented in a form of the foregoing computer device. The charging trigger entity may be specifically a PCEF entity, a TDF entity, a classifier, or a service enabler.

When the computer device is the service enabler, and when the service enabler operates, the processor 71 reads a program in the memory 74, and the program is specifically:
receiving a data packet, and determining, according to processing indication information carried in the data packet, to process the data packet; processing the data packet; and sending usage information of the service enabler to the charging system by using the output interface 73, where the usage information of the service enabler includes attribute information of the service enabler, and further includes at least one of time information, event information, or traffic information of processing the data packet by the service enabler.

The foregoing computer device 700 may be a general-purpose computer device or a special-purpose computer device. In a specific implementation, the computer device 700 may be a desktop computer, a portable computer, a network server, a personal digital assistant (Personal Digital Assistant, PDA), a mobile phone, a tablet, a wireless terminal device, a communications device, an embedded device, or a device having a similar structure in FIG. 7. A type of the computer device 700 is not limited in this embodiment of the present invention.

The network device such as the PCEF, the TDF, the classifier, or the service enabler in FIG. 1 and FIG. 4 may be the computer device 700 shown in FIG. 7. For example, the PCEF is the computer device 700, and a memory of the PCEF stores one or more software modules. The PCEF may implement a software module by using the processor and program code in the memory, so as to implement a charging method based on a traffic steering policy. For example, the service enabler is the computer device 700, and a memory of the service enabler stores one or more software modules. The service enabler may implement a software module by using the processor and program code in the memory, so as to implement a charging method based on a service enabler.

FIG. 8 is a schematic structural diagram of a charging trigger entity 800 according to an embodiment of the present invention. The charging trigger entity 800 includes a receiving module 802, a processing module 804, and a sending module 806. The charging trigger entity 800 is the PCEF or the TDF or the classifier shown in FIG. 1, or the classifier or the service enabler shown in FIG. 4.

The receiving module 802 is configured to receive a data packet.

The processing module 804 is configured to determine, according to identification information carried in the data packet, a traffic steering policy used by the data packet, where the traffic steering policy indicates a service enabler that processes the data packet.

The sending module 806 is configured to send usage information of the traffic steering policy to a charging system, where the usage information of the traffic steering policy is used for charging.

Optionally, the receiving module 802 is further configured to obtain a correspondence between the identification information and the traffic steering policy; and the processing module 804 is further configured to determine, according to the correspondence, the traffic steering policy used by the data packet.

Optionally, the usage information of the traffic steering policy includes attribute information of the service enabler that processes the data packet, and further includes at least one of time information of using the traffic steering policy or traffic information of the data packet that uses the traffic steering policy.

Optionally, the sending module 806 sends the usage information of the traffic steering policy to the charging system when a preset reporting condition is met, and the preset reporting condition includes instant reporting, reporting within a specified time period, or reporting when a specified capacity is reached.

Optionally, the traffic steering policy further indicates a sequence for processing the data packet by the service enabler that processes the data packet.

In this embodiment, the receiving module 802, the processing module 804, and the sending module 806 are presented in forms of function modules. The "module" herein may be an application-specific integrated circuit (application-specific integrated circuit, ASIC), a circuit, a processor and a memory that perform one or more software or firmware programs, an integrated logic circuit, and/or another component that may provide the foregoing functions. In a simple embodiment, persons skilled in the art may think about that the receiving module 802 may be implemented by using the processor, the memory, and the input interface of the computer device 700, the processing module 804 may be implemented by using the processor and the memory in the computer device 700, and the sending module 806 may be implemented by using the processor, the memory, and the output interface of the computer device 700.

FIG. 9 is a schematic structural diagram of a service enabler 900 according to an embodiment of the present invention. The service enabler 900 includes a receiving module 902, a processing module 904, and a sending module 906. The service enabler 900 is the service enabler shown in FIG. 1 or the service enabler shown in FIG. 4.

The receiving module 902 is configured to receive a data packet.

The processing module 904 is configured to determine, according to processing indication information carried in the data packet, to process the data packet, and process the data packet.

The sending module 906 is configured to send usage information of the service enabler to a charging system, where the usage information of the service enabler includes attribute information of the service enabler, and further includes at least one of time information, event information, or traffic information of processing the data packet by the service enabler.

Optionally, the processing indication information includes an identifier of the service enabler or identification information of the data packet.

Optionally, when the processing indication information includes the identification information of the data packet, before the receiving module 902 receives the data packet, the receiving module 902 is further configured to obtain a correspondence between the identification information and the traffic steering policy, and the processing module 904 is further configured to determine, according to the identification information carried in the data packet and the correspondence, to process the data packet.

Optionally, the sending module 906 is configured to send the usage information of the service enabler to the charging system by using a classifier.

Optionally, the data packet further carries a traffic steering policy identifier, and the sending module 906 is configured to send the usage information of the service enabler to the charging system by using a TSSF entity, where the usage information of the service enabler further includes the traffic steering policy identifier, and the traffic steering policy identifier is used to associate usage information of multiple service enablers.

Optionally, the sending module 906 sends the usage information of the service enabler to the charging system when a preset reporting condition is met, and the preset reporting condition includes instant reporting, reporting within a specified time period, or reporting when a specified capacity is reached.

In this embodiment, the receiving module 902, the processing module 904, and the sending module 906 are presented in forms of function modules. The "module" herein may be an application-specific integrated circuit (application-specific integrated circuit, ASIC), a circuit, a processor and a memory that perform one or more software or firmware programs, an integrated logic circuit, and/or another component that may provide the foregoing functions. In a simple embodiment, persons skilled in the art may think about that the receiving module 902 may be implemented by using the processor, the memory, and the input interface of the computer device 700, the processing module 904 may be implemented by using the processor and the memory in the computer device 700, and the sending module 906 may be implemented by using the processor, the memory, and the output interface of the computer device 700.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A charging method, wherein the method comprises:
after receiving a data packet, determining, by a charging trigger entity according to identification information carried in the data packet, a traffic steering policy used by the data packet, wherein the traffic steering policy indicates a service enabler that processes the data packet; and
sending, by the charging trigger entity, usage information of the traffic steering policy to a charging system, wherein the usage information of the traffic steering policy is used for charging.

2. The method according to claim 1, wherein before the determining, by a charging trigger entity according to identification information carried in the data packet, a traffic steering policy used by the data packet, the method further comprises: obtaining, by the charging trigger entity, a correspondence between the identification information and the traffic steering policy; and
the determining, by a charging trigger entity according to identification information carried in the data packet, a traffic steering policy used by the data packet comprises: determining, by the charging trigger entity according to the correspondence, the traffic steering policy used by the data packet.

3. The method according to claim 1 or 2, wherein the usage information of the traffic steering policy comprises attribute information of the service enabler that processes the data packet, and further comprises at least one of time information of using the traffic steering policy or traffic information of the data packet that uses the traffic steering policy.

4. The method according to any one of claims 1 to 3, wherein the charging trigger entity is a policy and charging enforcement function PCEF entity, a traffic detection function TDF entity, a classifier, or a service enabler.

5. The method according to any one of claims 1 to 4, wherein the charging trigger entity sends the usage information of the traffic steering policy to the charging system when a preset reporting condition is met, and the preset reporting condition comprises instant reporting, reporting within a specified time period, or reporting when a specified capacity is reached.

6. The method according to any one of claims 1 to 5, wherein the traffic steering policy further indicates a sequence for processing the data packet by the service enabler that processes the data packet.

7. A charging method, wherein the method comprises:
receiving, by a service enabler, a data packet, and determining, according to processing indication information carried in the data packet, to process the data packet;
processing, by the service enabler, the data packet; and
sending, by the service enabler, usage information of the service enabler to a charging system, wherein the usage information of the service enabler comprises attribute information of the service enabler, and further comprises at least one of time information, event information, or traffic information of processing the data packet by the service enabler.

8. The method according to claim 7, wherein the processing indication information comprises an identifier of the service enabler or identification information of the data packet.

9. The method according to claim 8, wherein the method further comprises: when the processing indication information comprises the identification information of the data packet, before receiving the data packet, obtaining, by the service enabler, a correspondence between the identification information and the traffic steering policy; and the determining, according to processing indication information carried in the data packet, to process the data packet comprises: determining, according to the identification information carried in the data packet and the correspondence, to process the data packet.

10. The method according to any one of claims 7 to 9, wherein the service enabler sends the usage information of the service enabler to the charging system by using a classifier.

11. The method according to any one of claims 7 to 10, wherein the data packet further carries a traffic steering policy identifier, the service enabler sends the usage information of the service enabler to the charging system by using a TSSF, the usage information of the service enabler further comprises the traffic steering policy identifier, and the traffic steering policy identifier is used to associate usage information of multiple service enablers.

12. The method according to any one of claims 7 to 11, wherein the service enabler sends the usage information of the service enabler to the charging system when a preset reporting condition is met, and the preset reporting condition comprises instant reporting, reporting within a specified time period, or reporting when a specified capacity is reached.

13. A charging trigger entity, comprising a receiving module, a processing module, and a sending module, wherein
the receiving module is configured to receive a data packet;
the processing module is configured to determine, according to identification information carried in the data packet, a traffic steering policy used by the data packet, wherein the traffic steering policy indicates a service enabler that processes the data packet; and
the sending module is configured to send usage information of the traffic steering policy to a charging system, wherein the usage information of the traffic steering policy is used for charging.

14. The charging trigger entity according to claim 13, wherein the receiving module is further configured to obtain a correspondence between the identification information and the traffic steering policy, and
the processing module is further configured to determine, according to the correspondence, the traffic steering policy used by the data packet.

15. The charging trigger entity according to claim 13 or 14, wherein the usage information of the traffic steering policy comprises attribute information of the service enabler that processes the data packet, and further comprises at least one of time information of using the traffic steering policy or traffic information of the data packet that uses the traffic steering policy.

16. The charging trigger entity according to any one of claims 13 to 15, wherein the apparatus is a policy and charging enforcement function PCEF entity, a traffic detection function TDF entity, a classifier, or a service enabler.

17. The charging trigger entity according to any one of claims 13 to 16, wherein the sending module sends the usage information of the traffic steering policy to the charging system when a preset reporting condition is met, and the preset reporting condition comprises instant reporting, reporting within a specified time period, or reporting when a specified capacity is reached.

18. The charging trigger entity according to any one of claims 13 to 17, wherein the traffic steering policy further indicates a sequence for processing the data packet by the service enabler that processes the data packet.

19. A service enabler, comprising a receiving module, a processing module, and a sending module, wherein
the receiving module is configured to receive a data packet;
the processing module is configured to determine, according to processing indication information carried in the data packet, to process the data packet, and process the data packet; and
the sending module is configured to send usage information of the service enabler to a charging system, wherein the usage information of the service enabler comprises attribute information of the service enabler, and further comprises at least one of time information, event information, or traffic information of processing the data packet by the service enabler.

20. The service enabler according to claim 19, wherein the processing indication information comprises an identifier of the service enabler or identification information of the data packet.

21. The service enabler according to claim 20, wherein when the processing indication information comprises the identification information of the data packet, before the receiving module receives the data packet, the receiving module is further configured to obtain a correspondence between the identification information and the traffic steering policy, and the processing module is further configured to determine, according to the identification information carried in the data packet and the correspondence, to process the data packet.

22. The service enabler according to any one of claims 19 to 21, wherein the sending module is configured to send the usage information of the service enabler to the charging system by using a classifier.

23. The service enabler according to any one of claims 19 to 22, wherein the data packet further carries a traffic steering policy identifier, and the sending module is configured to send the usage information of the service enabler to the charging system by using a TSSF, wherein the usage information of the service enabler further comprises the traffic steering policy identifier, and the traffic steering policy identifier is used to associate usage information of multiple service enablers.

24. The service enabler according to any one of claims 19 to 23, wherein the sending module sends the usage information of the service enabler to the charging system when a preset reporting condition is met, and the preset reporting condition comprises instant reporting, reporting within a specified time period, or reporting when a specified capacity is reached.

25. A charging apparatus, comprising a processor, an input interface, an output interface, and a memory, wherein
the processor reads a program in the memory, so as to perform the method according to any one of claims 1 to 6.

26. A charging apparatus, comprising a processor, an input interface, an output interface, and a memory, wherein
the processor reads a program in the memory, so as to perform the method according to any one of claims 7 to 12.
